# EUROPEAN PATENT SPECIFICATION

(11) **EP 2 639 919 B1**
(45) Date of publication and mention of the grant of the patent: **27.05.2015**
(21) Application number: 13158178.7
(22) Date of filing: 07.03.2013
(51) Int. Cl.: H02J 3/00, H02J 3/32, H02J 3/38

(54) **Electric power supply-and-demand control apparatus**
Vorrichtung zur Steuerung von Stromangebot und -nachfrage
Appareil de commande pour demande et offre de puissance électrique

(30) Priority: 14.03.2012 JP 2012057757
(43) Date of publication of application: 18.09.2013
(73) Proprietor: Kabushiki Kaisha Toshiba, Minato-ku, Tokyo 105-8001 (JP)
(72) Inventor: Okayama, Hitoshi, Tokyo 105-8001 (JP); Ozaki, Yukihiro, Tokyo 105-8001 (JP); Tanaka, Ryo, Tokyo 105-8001 (JP); Tsuji, Hisashi, Tokyo 105-8001 (JP); Takashima, Chikara, Tokyo 105-8001 (JP)
(74) Representative: Lind, Urban Arvid Oskar

(56) References cited:
- EP-A1- 2 477 307
- EP-A2- 1 531 542
- US-A1- 2004 070 280
- US-A1- 2011 029 141
- US-A1- 2011 231 028

## Description

### FIELD

Embodiments described herein relate generally to an electric power supply-and-demand control apparatus which performs electric power supply-and-demand control of an electric power system.

### BACKGROUND

In an electric power system, electric power supply-and-demand control has been performed so that the output of power generation may follow a fluctuation in the power demand of the day on the basis of the result of a power supply-and-demand forecast, for example, on the basis of an power supply-and-demand plan in any time zone on a specific day, such as the next day. The plan has been made to ensure the necessary reserve power, taking into account the characteristics of the held supply capability, including the economic efficiency.

An automatic power dispatching system for making a supply-and-demand plan in an electric power system determines the output dispatching of each of the generators by a plurality of classifications, referring to accumulated past data items, including total power demand information, temperature, and weather, when making the supply-and-demand plan. The classifications include a base supply capability, a middle supply capability, and a peak supply capability.

In addition, the automatic power dispatching system applies economic load dispatching control (FLD) to the output dispatching. The control method is to calculate the economic output dispatching of the individual fuel generators and hydroelectric generators according to a fluctuation in the power demand, thereby controlling each generator.

Generally, generators are controlled by combining the economic load dispatching control and load frequency control (LFC). Specifically, when the power demand fluctuates at intervals of several minutes, the economic load dispatching control is applied to perform supply-and-demand control. When the power demand fluctuates at intervals of several seconds, the load frequency control is applied to supply-and-demand control.

The above technique is fundamental to power supply-and-demand control. In recent years, the introduction of natural energy, renewable energy, as energy for generation has been making steady progress. It is conceivable that, in the future, dispersed power sources located in various places near power demanding regions will replace an existing high-capacity power source and therefore the power source configuration in the electric power system will be reexamined substantially. The dispersed power sources include natural energy power sources and secondary batteries. The natural energy power sources are comparatively small-scale generating apparatuses using natural energy, including a photovoltaic power system, a solar thermal electric generation system, a wind generator system, a hydroelectric system, and a geothermal power generation system.

The output electric power from a natural energy power source, such as a photovoltaic power system or a wind generator system, depends on weather conditions. Therefore, the fluctuation range of the output of power generation might increase significantly, depending on some natural energy power source. For example, if the output of power generation of a natural energy power source is reflected in a supply-and-demand plan on the basis of only the rated output of the natural energy power source, the power might not be supplied to meet the power demand of the day. In addition, this contributes to a significant fluctuation in the load frequency, making it impossible to realize a stable electric power supply.

Furthermore, it is conceivable that the electric power generated by a natural energy power source is charged in advance in a secondary battery, such as a lithium-ion battery, a nickel-hydrogen battery, a lead accumulator, or a sodium-sulfur battery, and is discharged when necessary, thereby equalizing the output of the electric power system. However, the secondary battery might not be discharged because the usable electric power has decreased after the start of discharging, depending on the state of charge (SOC) of the secondary battery, that is, the ratio of the currently usable electric power to the full charging capacity. For example, when the output power of the secondary battery has been reflected in a supply-and-demand plan on the basis of only the full charging capacity of the secondary battery, the power might not be supplied to meet the power demand of the day as when a natural energy power source has been used, making it impossible to realize a stable electric power supply.

### BRIEF DESCRIPTION OF THE DRAWINGS

FIG. 1 shows a configuration of an electric power system supply-and-demand control system according to the first embodiment;
FIG. 2 is a block diagram showing a functional configuration of the main controller of the electric power supply-and-demand control apparatus in the electric power system supply-and-demand control system according to the first embodiment;
FIG. 3 is a flowchart to explain an example of the procedure for determining whether to set a dispersed power system as a dispatching object for a supply-and-demand plan in the electric power system supply-and-demand control system of the first embodiment;
FIG. 4 is a flowchart to explain an example of the procedure for determining whether to set a secondary battery as a dispatching object for a supply-and-demand plan in the electric power system supply-and-demand control system of the first embodiment;
FIG. 5 is a flowchart to explain an example of the operation of setting the dispatching priority order of economic load dispatching control in the electric power system supply-and-demand control system of the first embodiment;
FIG. 6 is a block diagram of a functional configuration of a main controller of an electric power supply-and-demand control apparatus in an electric power system supply-and-demand control system according to the second embodiment;
FIG. 7 is a flowchart to explain the procedure for determining whether to secure more electric power, taking weather conditions into account, in the electric power system supply-and-demand control system of the second embodiment;
FIG. 8 is a block diagram showing a functional configuration of the main controller of the electric power supply-and-demand control apparatus in the electric power system supply-and-demand control system according to the modification of the second embodiment; and
FIG. 9 is a flowchart to explain the procedure for determining whether to secure more electric power in the electric power system supply-and-demand control system according to the modification of the second embodiment, taking weather conditions into account.

### DETAILED DESCRIPTION

An electric power supply-and-demand control apparatus of the present invention is generally defined in claim 1. The electric power supply-and-demand control apparatus includes a measuring module which measures an output power characteristic of dispersed power sources arranged in various places in an electric power system. The electric power supply-and-demand control apparatus includes a determination module which determines based on the output power characteristic measured by the measuring module whether to set each of the dispersed power sources in various places as a dispatching object for an electric power supply-and-demand plan at a specific time on a specific date.

Hereinafter, embodiments will be explained with reference to the accompanying drawings.

### (First Embodiment)

First, a first embodiment will be explained.

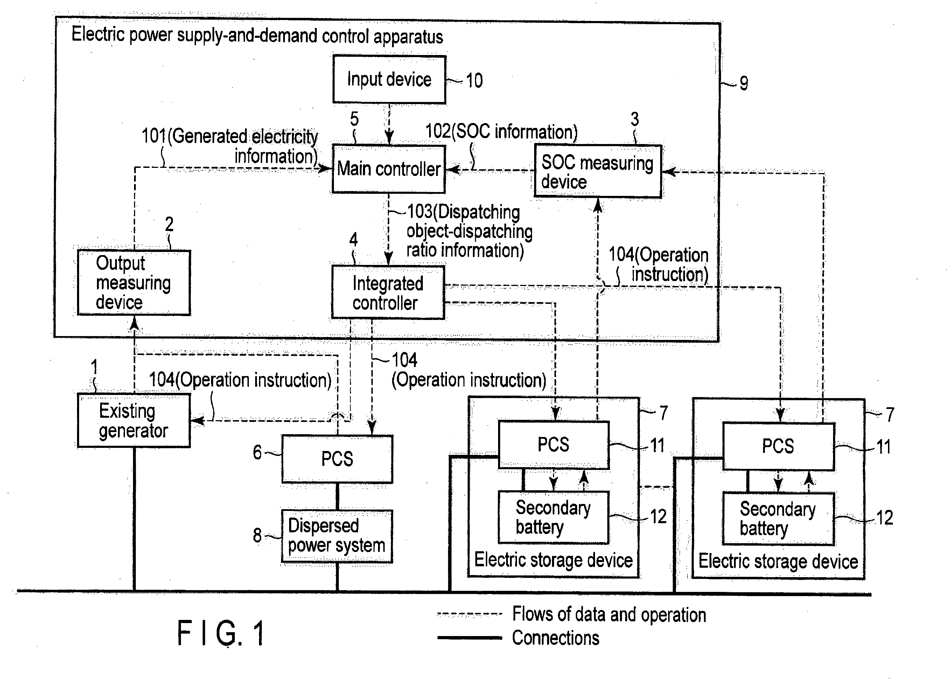

FIG. 1 shows a configuration of an electric power system supply-and-demand control system according to the first embodiment. As shown in FIG. 1, the electric power system supply-and-demand control system includes a plurality of existing generators 1, such as nuclear generators, a plurality of output measuring devices 2, a plurality of SOC measuring devices 3, a plurality of integrated controllers 4, a plurality of main controllers 5, a plurality of power conditioner subsystems (PCSs) 6, a plurality of electric storage devices 7, a plurality of dispersed power systems 8, and a plurality of electric power supply-and-demand control apparatus 9 in an electric power system.

Each electric storage device 7 includes a PCS 11 and a secondary battery 12. The secondary battery 12, which is a type of dispersed power source in the first embodiment, is a lithium-ion battery, a nickel-hydrogen battery, a lead accumulator, a sodium-sulfur battery, or the like. The secondary battery 12 may be replaced with a capacitor, a flywheel, superconducting magnetic energy storage (SMES), an electric car, or the like, provided that it is a power storage device.

As shown in FIG. 1, the secondary battery 12 in the electric storage device 7 is provided at each of a plurality of sites in the electric power system. Each site may be, for example, a secondary battery site of a lithium-ion battery or of a lead accumulator. The dotted lines in FIG. 1 represent the flows of various data items and manipulate signals. The solid lines in FIG. 1 represent electrical connections in the electric power system, that is, the flows of currents in the electric power system.

The dispersed power system 8, which is a type of dispersed power source in the first embodiment, is a natural energy power system that generates electricity using natural energy, such as a photovoltaic power system, a solar thermal electric generation system, a wind generator system, a hydroelectric system, or a geothermal power generation system. More than one dispersed power system 8 is provided in the electric power system.

The PCS 6 is provided next to the dispersed power system 8. The PCS 6 subjects electric power generated by the dispersed power system 8 to direct-current-to-alternating-current conversion and transmits the resulting power to a transmission network, or suppresses a fluctuation in the voltage due to an output power fluctuation. In addition, the PCS 11 in the electric storage device 7 charges electricity generated by the dispersed power system 8 in the secondary battery 12 in the electric storage device 7 or subjects the charged electricity to direct-current-to-alternating-current conversion and transits the resulting power to the transmission network.

The electric power supply-and-demand control apparatus 9 includes the output measuring device 2, SOC measuring device 3, integrated controller 4, main controller 5, and an input device 10.

The output measuring device 2 measures the value of the output power from the existing generator 1 and outputs the value as generated electricity information 101 to the main controller 5. In addition, the output measuring device 2 measures the value of the output power from each dispersed power system 8 and outputs the value as generated electricity information 101 to the main controller 5. The value of the output power from the dispersed power system 8 is measured by the PCS 6 provided next to the dispersed power system 8 and is output together with identification data on the measured dispersed power system 8 to the output measuring device 2.

The SOC measuring device 3 measures the SOC value of the secondary battery 12 of each storage device 7 and outputs the value as SOC information 102 to the main controller 5. The SOC value is the ratio (in %) of the currently usable electric power to the full charging capacity. The SOC value of the secondary battery 12 is measured by the PCS 11 in the storage device 7 that includes the secondary battery 12 and is output together with identification data on the measured secondary battery 12 to the SOC measuring device 3.

While the SOC value is the ratio (in %) of the currently usable electric power to the full charging capacity of the secondary battery 12, it may be electric quantity information, such as the currently usable electric power (in Wh) or the potential difference between the positive electrode and negative electrode of the secondary battery 12. As described above, when the second battery 12 outputs electric quantity information to the SOC measuring device 3, the SOC measuring device 3 calculates the currently usable electric power on the basis of the received electric quantity information.

On the basis of the fluctuation range of the output of each of the dispersed power systems 8 and the SOC information on each of the secondary batteries 12, the main controller 5 determines whether to set each of a plurality of dispersed power systems 8 and a plurality of secondary batteries 12 as a dispatching object for a supply-and-demand plan in any time zone on the specific day. The main controller 5 determines the dispatching ratio for a supply-and-demand plan in an arbitrary time zone for the dispersed power systems 8 and secondary batteries 12 set as dispatching objects by the determination. Hereinafter, any time zone on the specific day is simply referred to as the specific time zone.

Specifically, if the fluctuation range of the output power of the dispersed power system 8, a determination object, selected from the dispersed power systems 8 is less than a rated value (A), the main controller 5 sets the dispersed power system 8 as a dispatching object for a supply-and-demand plan in the specific time zone. The rated value (A) is a value a manager of the electric power system supply-and-demand control system has set for the dispersed power system 8, a determination object, using the input device 10 of the main controller 5.

If the fluctuation range is greater than or equal to the rated value (A), the main controller 5 determines the dispersed power system 8 to be unsuitable for a stable power supply in the specific time zone and sets it as an undispatching object for the supply-and-demand plan in the specific time zone. By doing this, a dispersed power system 8 with a large output fluctuation range can be eliminated from the dispatching objects for the supply-and-demand plan, contributing to the output equalization in power supply according to the supply-and-demand plan.

The rated value (A) is the ratio of the fluctuation range (in W) of the output power of a dispersed power system 8 to be determined to be a dispatching object or not to the predicted value (in W) of the system capacity in the specific time zone of the electric power system that includes the dispersed power systems 8 and secondary batteries 12. The rated value (A) is set for each of the dispersed power systems 8. The system capacity is the total power demand in the electric power system. In addition, the rated value (A) may be the ratio of the fluctuation range of the output power of a dispersed power system 8, a determination object, to the rated output (in W) of the dispersed power system 8, the determination object.

Furthermore, if the SOC value of a secondary battery 12, a determination object, is greater than or equal to the rated value (B) set by the manager using the input device 10 of the determination object on the basis of the predicted value of the system capacity in the specific time zone, the main controller 5 sets the secondary battery 12 as a discharging control object in the specific time zone. If the SOC value of the secondary battery 12, a determination object, is less than the rated value (B), the main controller 5 sets the secondary battery 12 as a charging control object in the specific time zone. The rated value (B) is set for each of the secondary batteries 12.

However, the main controller 5 makes a specific decision on a secondary battery 12 whose full charging capacity is equal or larger than the rated value (C) the manager has set for each of the secondary batteries 12 determined to be discharging control objects. The decision is made to set a secondary battery 12 unsuitable for use due to deterioration with age as an undispatching object for the supply-and-demand plan in the specific time zone. The rated value (C) is set for each of the secondary batteries 12.

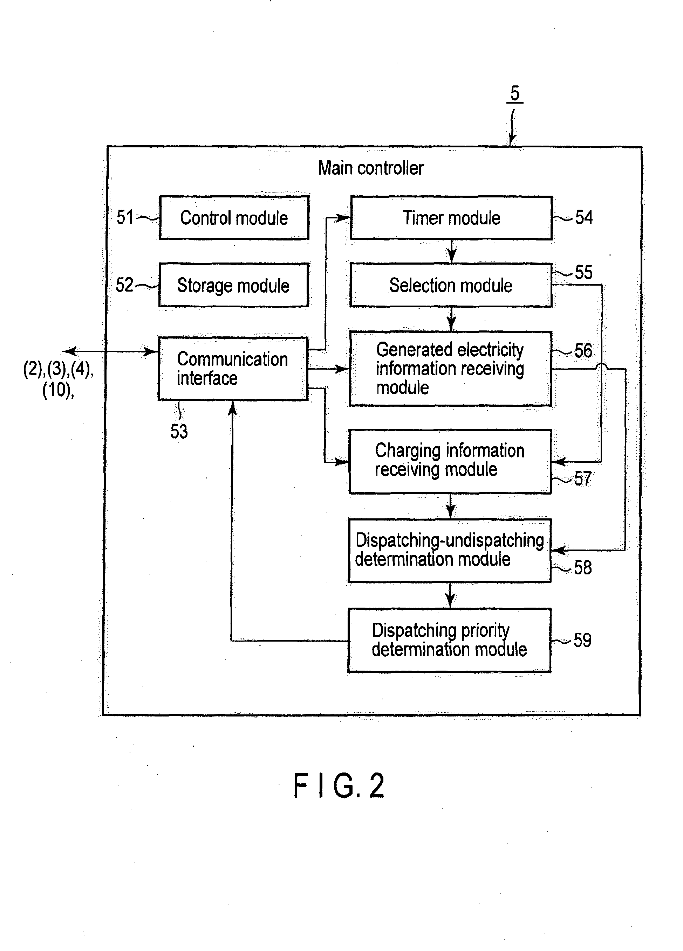

FIG. 2 is a block diagram showing a functional configuration of the main controller of the electric power supply-and-demand control apparatus in the electric power system supply-and-demand control system according to the first embodiment.

As shown in FIG. 2, the main controller 5 in the electric power supply-and-demand control apparatus 9 includes a control module 51 that supervises the processing operation of the entire apparatus, a storage module 52, a communication interface 53, a timer module 54 that clocks the present time, a selection module 55, a generated electricity information receiving module 56, a charging information receiving module 57, a dispatching-undispatching determination module 58, and a dispatching priority determination module 59. The communication interface 53, timer module 54, selection module 55, generated electricity information receiving module 56, charging information receiving module 57, dispatching-undispatching determination module 58, and dispatching priority determination module 59 are the processing modules realized by software that runs on a microprocessor. They can mutually exchange information as shown in FIG. 2.

The selection module 55 has a first function of selecting a single dispersed power system 8 to be determined to be a dispatching object for an electric power supply-and-demand plan in a specific time zone or not from the dispersed power systems 8 in the electric power system.

The selection module 55 has a second function of selecting an identification data item of a single secondary battery 12 to be determined to be a dispatching object for the electric power supply-and-demand plan in the specific time zone or not from the secondary batteries 12 in the electric power system.

The generated electricity information receiving module 56 receives generated electricity information 101 indicating the value of the output power from the existing generator 1 and dispersed power systems 8 measured by the output measuring device 2 via the communication interface 53.

The charging information receiving module 57 receives SOC information 102 indicating the SOC value of the secondary batteries 12 measured by the SOC measuring device 3 via the communication interface 53.

The dispatching-undispatching determination module 58 has a first function of determining whether to set a dispersed power system 8 whose generated electricity 101 has been measured as a dispatching object for the supply-and-demand plan in the specific time zone on the basis of the generated electricity 101 received by the generated electricity information receiving module 56.

In addition, the dispatching-undispatching determination module 58 has a second function of making a specific determination on the basis of SOC information 102 indicating the SOC value of the secondary batteries 12 received by the charging information receiving module 57. Specifically, the dispatching-undispatching determination module 58 determines whether the secondary battery 12 whose SOC information 102 has been measured is set as a discharging control object to be dispatched for the supply-and-demand plan in the specific time zone or as a charging control object not to be dispatched for the supply-and-demand plan.

Furthermore, the dispatching-undispatching determination module 58 has a third function of determining whether a secondary battery 12 determined to be a discharging control object as described above is set as a dispatching object for the supply-and-demand plan in the specific time zone because of no deterioration with age or as an undispatching object for the supply-and-demand plan in the specific time zone because of deterioration with age.

The dispatching priority determination module 59 determines the order of dispatching priority for each of the existing generator 1, dispersed power system 8, and secondary batteries 12 in economic load dispatching control for the supply-and-demand plan in the specific time zone on the basis of the determination result of the dispatching-undispatching determination module 58.

Next, the operation procedure of the electric power system supply-and-demand control system configured as shown in FIG. 1 will be explained.

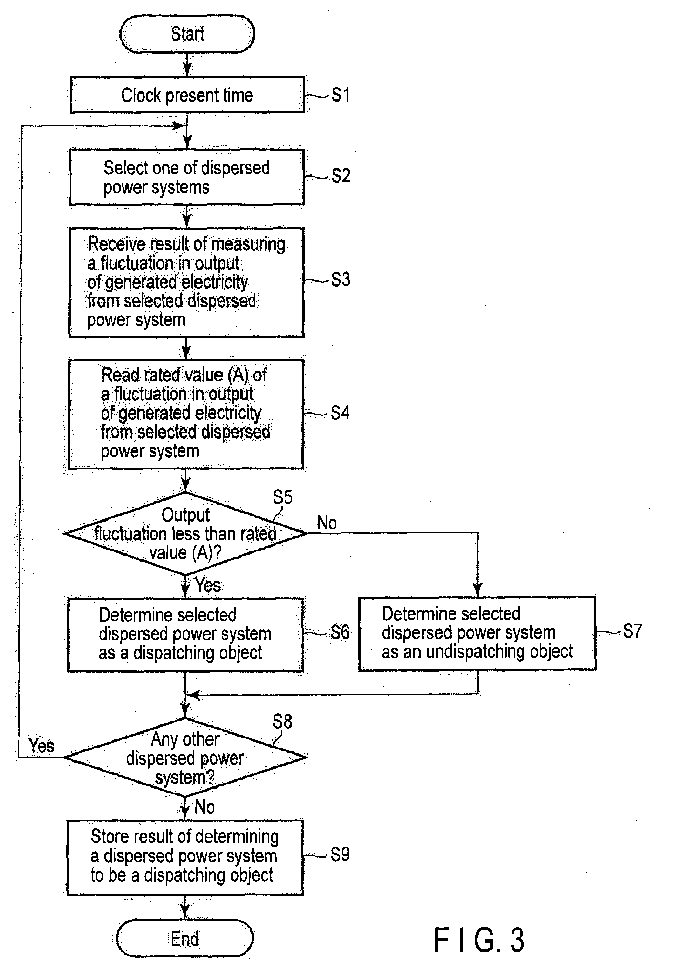

FIG. 3 is a flowchart to explain an example of the procedure for determining whether to set a dispersed power system as a dispatching object for a supply-and-demand plan in the electric power system supply-and-demand control system of the first embodiment.

First, the output measuring device 2 of the electric power supply-and-demand control apparatus 9 measures each of the value of the output power generated by the existing generator 1 and the value of the output power generated by the dispersed power systems 8. The output measuring device 2 transmits these measured output power values as generated electricity information 101 together with identification data unique to the measured existing generator 1 and dispersed power systems 8 to the main controller 5.

Then, the timer module 54 of the main controller 54 in the electric power supply-and-demand control apparatus 9 clocks the present time (step S1) Here, suppose an electric power supply-and-demand plan to be made is a supply-and-demand plan in the specific time zone. In the first embodiment, it is assumed that the generated output from the existing generator 1 is constant, regardless of time, and the generated output is always a dispatching object for the electric power supply-and-demand plan in the specific time zone.

Then, the selection module 55 of the main controller 5 selects an identification data item of a single dispersed power system 8 to be determined to be a dispatching object for the supply-and-demand plan in the specific time zone or not among the dispersed power systems 8 in the electric power system (step S2). Identification data items of the individual dispersed power systems 8 have been stored in the storage module 52.

The generated electricity information receiving module 56 of the main controller 5 receives generated electricity information 101 on a dispersed power system 8 corresponding to the selected identification data item transmitted from the output measuring device 2 via the communication interface 53 (step S3). The generated electricity information 101 is information on the generated electricity in a given period of time before and after the current time clocked in step S1. Information on the generated electricity indicates the output fluctuation range during the given period of time.

Then, the generated electricity information receiving module 56 reads a rated value (A) of the fluctuation range of the output power of the dispersed power system 8 corresponding to the selected identification data item from the storage module 52 (step S4). The rated value (A) can be regarded as a value at which it is impossible to achieve stable power supply according to a supply-and-demand plan in a specific time zone. The rated value (A) is the lower limit of the fluctuation range of the output power of the dispersed power system 8. In addition, the value has been previously input by the manager from the input device 10 for each of the dispersed power systems 8. The value has been stored together with identification data item of the relevant dispersed power system 8 in the storage module 52.

Then, the dispatching-undispatching determination module 58 recognizes the value of the output fluctuation range of the generated electricity in the given period of time before and after the clocked current time shown in the generated electricity information 101 on the selected dispersed power system 8.

The dispatching-undispatching determination module 58 compares the recognized value of the output fluctuation range with the rated value (A) of the fluctuation range of the output power from the selected dispersed power system 8, thereby determining whether the recognized value of the output fluctuation range is less than or equal to the rated value (A) (step S5).

If the recognized value of the output fluctuation range is less than the rated value (A) (YES in step S5), the dispatching-undispatching determination module 58 regards the selected dispersed power system 8 as being less likely to prevent stable power supply when it has been set as a dispatching object for the supply-and-demand plan in the specific time zone. The selected dispersed power system 8 is determined to be a dispatching object for the supply-and-demand plan in the specific time zone.

Then, the dispatching-undispatching determination module 58 stores, in the storage module 52, the identification data item of the determined dispersed power system 8 together with the value of the generated electricity received in step S3 as one of the dispersed power systems set as dispatching objects for the supply-and-demand plan in the specific time zone (step S6).

If the recognized value of the output fluctuation range is greater than or equal to the rated value (A) (NO in step S5), the dispatching-undispatching determination module 58 regards the selected dispersed power system 8 as being likely to prevent stable power supply when it has been set as a dispatching object for the supply-and-demand plan in the specific time zone. The selected dispersed power system 8 is determined to be an undispatching object for the supply-and-demand plan in the specific time zone.

In this case, the dispatching-undispatching determination module 58 stores, in the storage module 52, the identification data item of the determined dispersed power system 8 together with the value of the generated electricity received in step S3 as one of the dispersed power systems set as undispatching objects for the supply-and-demand plan in the specific time zone (step S7).

Then, if there are other dispersed power systems 8 that have not been selected as objects to be determined to be dispatching objects for the supply-and-demand plan in the specific time zone or not among the dispersed power systems 8 in the electric power system (YES in step S8), the selection module 55 returns to step S2. The selection module 55 selects an identification data item on any one of the unselected dispersed power systems 8 as a new determination object and proceeds to step S3 and forward.

In addition, if there is no other dispersed power system 8 that has not been selected as an object to be determined to be a dispatching object for the supply-and-demand plan in the specific time zone or not among the dispersed power systems 8 in the electric power system (NO in step S8), the selection module 55 reads, from the storage module 52, an identification data item on the dispersed power system 8 stored in the storage module 52 in step S6 and determined to be a dispatching object for the supply-and-demand plan in the specific time zone. That there is no other dispersed power system 8 means that whether to set a dispersed power system 8 as a dispatching object for the supply-and-demand plan in the specific time zone has been determined for all of the dispersed power systems 8 in the electric power system. Then, the selection module 55 stores the determination result together with the plan date of the supply-and-demand plan and the value of the generated electricity received in step S3 as the determination result into the storage module 52 (step S9).

As described above, the main controller 5 can determine whether to set each of the dispersed power systems 8 in the electric power system as a dispatching object for the supply-and-demand plan in the specific time zone. Therefore, dispersed power systems 8 can be easily sorted out to make a supply-and-demand plan for stable power supply.

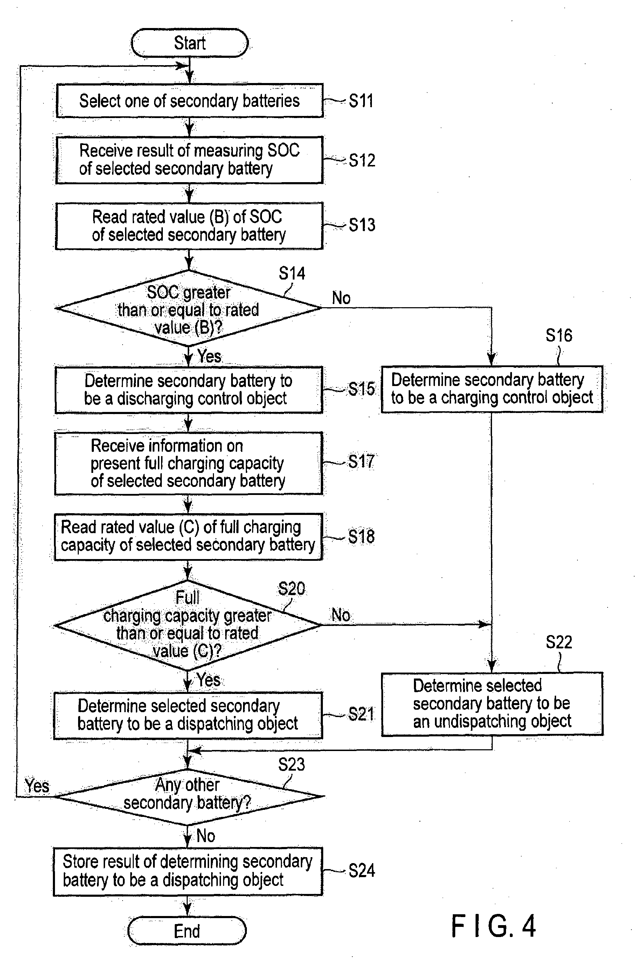

FIG. 4 is a flowchart to explain an example of the procedure for determining whether to set a secondary battery as a dispatching object for a supply-and-demand plan in the electric power system supply-and-demand control system of the first embodiment.

First, the SOC measuring device 3 of the electric power supply-and-demand control apparatus 9 measures the SOC value of a secondary battery 12 via the PCS 11 of the electric storage device 7 that includes the secondary battery 12. The SOC measuring device 3 transmits the measured SOC value as SOC information 102 together with identification data unique to the measured secondary battery 12 to the main controller 5.

Furthermore, the SOC measuring device 3 measures the value of the full charging capacity of the secondary battery 12 via the PCS 11 of the electric charging device 7 that includes the secondary battery 12. The SOC measuring device 3 transmits the measured value of the full charging capacity together with identification data unique to the measured secondary battery 12 to the main controller 5. Although the full charging capacity is the same as a designed value at the beginning of the start-up of the secondary battery 12, it decreases gradually due to deterioration with age resulting from the elapsed time since the start-up or the accumulation of the operating time.

Then, the selection module 55 of the main controller 5 selects an identification data item on a single secondary battery 12 to be determined to be a dispatching object for the supply-and-demand plan in the specific time zone or not among the secondary batteries 12 in the electric power system (step S11). Identification data items on the secondary batteries 12 have been stored in the storage module 52.

The charging information receiving module 57 of the main controller 5 receives SOC information 102 on a secondary battery 12 corresponding to the selected identification data item transmitted from the SOC measuring device 3 via the communication interface 53 (step S12).

Then, the dispatching-undispatching determination module 58 reads the SOC rated value (B) of the secondary battery 12 corresponding to the selected identification data item from the storage module 52 (step S13). The rated value (B) is the SOC lower limit at which the selected secondary battery 12 is to be set as a discharging control object in the specific time zone. The value is previously input by the manager from the input device 10 for each of the secondary batteries 12 and is stored together with an identification data item on the relevant secondary battery 12 in the storage module 52.

Then, the dispatching-undispatching determination module 58 recognizes the SOC value shown in SOC information 102 on the selected secondary battery 12 received in step S12. The dispatching-undispatching determination module 58 compares the recognized SOC value with the SOC rated value (B) of the selected secondary battery 12 read in step S13, thereby determining whether the recognized SOC value is greater than or equal to the rated value (B) (step S14).

If the recognized SOC value is greater than or equal to the rated value (B) (YES in step S14), the dispatching-undispatching determination module 58 regards the selected secondary battery 12 as being in no danger of preventing stable power supply when the battery 12 has been set as a dispatching object for a supply-and-demand plan in a specific time zone because there is a room for SOC even when the secondary battery 12 has been set as a discharging control object, provided that the secondary battery 12 has not deteriorated with age. At this time, the dispatching-undispatching determination module 58 determines the secondary battery 12 as a discharging control object for power supply according to the supply-and-demand plan in the specific time zone. The dispatching-undispatching determination module 58 stores, in the storage module 52, the identification data item of the determined dispersed power system 8 together with the SOC value received in step S12 as one of the secondary batteries 12 set as charging control objects (step S15).

If the recognized SOC value is less than the rated value (B) (NO in step S14), the dispatching-undispatching determination module 58 regards the selected secondary battery 12 as needing charging since the battery 12 might prevent stable power supply when it has been set as a dispatching object for the supply-and-demand plan in the specific time zone because there is no room for SOC. Then, the dispatching-undispatching determination module 58 determines the selected secondary battery 12 to be a charging control object from this time on.

The dispatching-undispatching determination module 58 stores, in the storage module 52, the identification data item of the determined secondary battery 12 together with the SOC value received in step S12 as one of the secondary batteries 12 set as charging control objects (step S16). The secondary battery 12 determined to be a charging control object is used for output equalization at the time of fluctuations in the output power of dispersed power systems 8.

In this way, the work of sorting out the secondary batteries 12 in the electric power system by use into charging secondary batteries for power supply and secondary batteries for equalizing the output of dispersed power systems 8 according to a supply-and-demand plan can be done automatically, enabling the burden on the manager to be reduced.

At this time, the dispatching-undispatching determination module 58 determines the secondary battery 12 determined to be a charging control object to be an undispatching object for the supply-and-demand plan in the specific time zone. The dispatching-undispatching determination module 58 stores, in the storage module 52, the identification data item of the determined secondary battery 12 together with the SOC value received in step S12 as one of the secondary batteries 12 set as undispatching objects for the supply-and-demand plan in the specific time zone (step S22).

After step S15, the charging information receiving module 57 of the main controller 5 receives information on the full charging capacity of a secondary battery 12 corresponding to the selected identification data item transmitted from the SOC measuring device 3 via the communication interface 53 (step S17).

Then, the dispatching-undispatching determination module 58 reads the rated value (C) of the full charging capacity of a secondary battery 12 determined to be as a discharging control object from the storage module 52 (step S18). The rated value (C) is a reference value of the full charging capacity at which a secondary battery 12 determined to be a discharging control object can be regarded as having deteriorated with age. The value has been previously input by the manager from the input device 10 for each of the secondary batteries 12. The value has been stored together with an identification data item on the relevant secondary battery 12 in the storage module 52.

Then, the dispatching-undispatching determination module 58 compares the value of the full charging capacity of the selected secondary battery 12 received in step S17 with the rated value (C) of the full charging capacity of the selected secondary battery 12 read in step S18, thereby determining whether the value of the full charging capacity received is greater than or equal to the rated value (C) (step S20).

If the value of the full charging capacity received is greater than or equal to the rated value (C) (YES in step S20), the dispatching-undispatching determination module 58 regards the selected secondary battery 12 as being in no danger of preventing stable power supply when the battery 12 has been set as a dispatching object for a supply-and-demand plan in a specific time zone because there is a room for the SOC as described above and the dispersed power system 8 has not deteriorated with age. Then, the dispatching-undispatching determination module 58 determines the selected secondary battery 12 as a dispatching object for the supply-and-demand plan in the specific time zone.

The dispatching-undispatching determination module 58 stores, in the storage module 52, the identification data item of the determined secondary battery 12 together with the SOC value received in step S12 and the value of the full charging capacity received in step S17 as one of the secondary batteries 12 set as dispatching objects for the supply-and-demand plan in the specific time zone (step S21).

If the recognized value of the full charging capacity is greater than or equal to the rated value (C) (NO in step S20), the dispatching-undispatching determination module 58 regards the selected secondary battery 12 as being in the danger of preventing stable power supply when the battery 12 is set as a dispatching object for the supply-and-demand plan in the specific time zone because there is a room for the SOC, but the secondary battery 12 has deteriorated with age, making the usable power significantly low. Then, dispatching-undispatching determination module 58 determines the selected secondary battery 12 to be an undispatching object for the supply-and-demand plan in the specific time zone.

The dispatching-undispatching determination module 58 stores, in the storage module 52, the identification data item of the determined secondary battery 12 together with the SOC value received in step S12 and the value of the full charging capacity received in step S17 as one of the secondary batteries 12 set as undispatching objects for the supply-and-demand plan in the specific time zone (step S22).

After step S22, if there is any other secondary battery 12 that has not been selected as an object to be determined to be a dispatching object for the supply-and-demand plan in the specific time zone or not among the secondary batteries 12 in the electric power system (YES in step S23), the selection module 55 returns to step S11. The selection module 55 selects an identification data item on any one of the unselected secondary batteries 12 as a new determination object and proceeds to step S12 and forward.

If there is no other secondary battery 12 that has not been selected as an object to be determined to be a dispatching object for the supply-and-demand plan in the specific time zone or not among the secondary batteries 12 in the electric power system (NO in step S23), the selection module 55 reads, from the storage module 52, an identification data item of the secondary battery 12 determined to be a dispatching object for the supply-and-demand plan in the specific time zone stored in the storage module 52 in step S22. That there is no other secondary battery 12 that has not been selected means that a determination whether to set a secondary battery 12 as a dispatching object for the supply-and-demand plan in the specific time zone has been made for all of the secondary batteries 12 in the electric power system. The selection module 55 stores the determination result together with the plan date of the supply-and-demand plan, the SOC value received in step S12, and the value of the full charging capacity received in step s17 into the storage module 52 (step S24).

As described above, the main controller 5 can determine whether to set each of the secondary batteries 12 in the electric power system as dispatching objects for a supply-and-demand plan in a specific time zone. Therefore, secondary batteries 12 can be sorted out easily to make a supply-and-demand plan for stable power supply.

In the first embodiment, when the value of the full charging capacity of a secondary battery 12 determined to be a discharging control object is greater than or equal to the rated value (C), the secondary battery 12 has been determined to be a dispatching object for a supply-and-demand plan. This is illustrative only. As for the deterioration of a secondary battery 12 with age, the dispatching-undispatching determination module 58 measures, for example, the accumulated operating time of each of the secondary batteries 12 in the electric power system and, when the accumulated operating time of a secondary battery 12 is less than a rated value determined for the secondary battery 12, may determine the secondary battery 12 to be a dispatching object for the supply-and-demand plan.

In addition, the dispatching-undispatching determination module 58 may count the number of charging and discharging cycles of a secondary battery 12 in advance and, when the count is less than a rated value determined for the secondary battery 12, determine the secondary battery 12 to be a dispatching object for the supply-and-demand plan.

Next, on the basis of the result of the determination whether to set each of the dispersed power systems 8 and secondary batteries 12 in the electric power system as a dispatching object for a supply-and-demand plan in a specific time zone as described above, the operation of determining the dispatching priority order of the dispersed power systems 8 and secondary batteries 12 set as dispatching objects by economical load dispatching control will be explained.

The economic output dispatching of the existing generator 1, dispersed power systems 8, and secondary batteries 12 is performed by the economic load dispatching control.

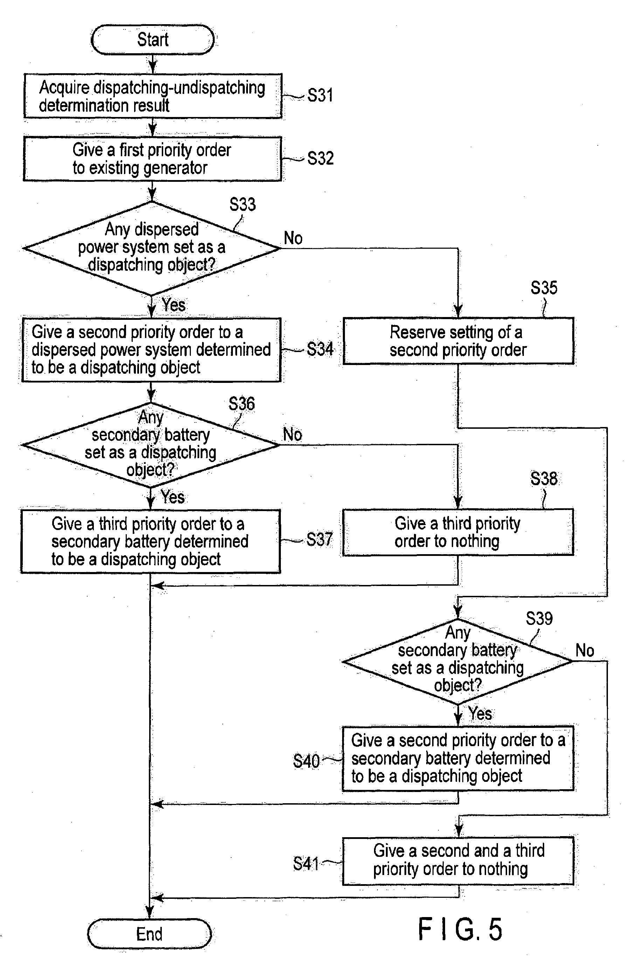

FIG. 5 is a flowchart to explain an example of the operation of setting the dispatching priority order of economic load dispatching control in the electric power system supply-and-demand control system of the first embodiment.

Suppose a state where a determination whether to set each of the dispersed power systems 8 and secondary batteries 12 belonging to an electric power system as a dispatching object for a supply-and-demand plan in a specific time zone has been made and the determination result has been stored in the storage module 52 of the main controller 5.

In this state, a dispatching priority order determination module 59 of the main controller 5 in the electric power supply-and-demand control apparatus 9 reads, from the storage module 52, the result of the determination whether to set dispersed power systems 8 and secondary batteries 12 as dispatching objects for the supply-and-demand plan in the specific time zone (step S31).

Then, the dispatching priority order determination module 59 determines the dispatching priority order of economic load dispatching control associated with a supply-and-demand plan in a specific time zone for the output power of the existing generator 1 shown by the read determination result to be a first priority order (step S32). The output power of the existing generator 1 given the first priority order is a base supply capability in the specific time zone.

Next, the dispatching priority order determination module 59 determines in the determination result read in step S31 whether there is a dispersed power system 8 determined to be a dispatching object for the supply-and-demand plan in the specific time zone (step S33).

If it has been determined in the determination result read in step S31 that there is a dispersed power system 8 determined to be a dispatching object for the supply-and-demand plan (YES in step S33), the dispatching priority order determination module 59 determines the dispatching priority order of economic load dispatching control associated with the supply-and-demand plan in the specific time zone for a dispersed power system 8 set as a dispatching object shown by the determination result read in step S31 to be a second priority order lower than the first priority order set in step S32 (step S34).

If it has been determined in the determination result read in step S31 that there is no dispersed power system 8 determined to be a dispatching object for the supply-and-demand plan (NO in step S33), the dispatching priority order determination module 59 reserves the setting of the dispatching priority order of economic load dispatching control associated with the supply-and-demand plan in the specific time zone to the second priority order (step S35).

After step S34, the dispatching priority order determination module 59 determines in the determination result read in step S31 whether there is a secondary battery 12 determined to be a dispatching object for the supply-and-demand plan in the specified time zone (step S36).

If it has been determined in the determination result read in step S31 that there is a secondary battery 12 determined to be a dispatching object for the supply-and-demand plan (YES in step S36), the dispatching priority order determination module 59 determines the dispatching priority order of economic load dispatching control associated with the supply-and-demand plan in the specific time zone for the secondary battery 12 set as a dispatching object shown by the determination result read in step S31 to be a third priority order lower than the second priority order set in step S34 (step S37). At this time, the dispatching priority orders that have been set include all of the first, second, and third priority orders.

If it has been determined in the determination result read in step S31 that there is no secondary battery 12 determined to be a dispatching object for the supply-and-demand plan (NO in step S36), the dispatching priority order determination module 59 terminates the setting of the dispatching priority order without setting the dispatching priority order of economic load dispatching control associated with the supply-and-demand plan in the specific time zone to the third priority order (step S38). At this time, the dispatching priority orders that have been set include only the first and second priority orders.

After step S35, the dispatching priority order determination module 59 determines in the determination result read in step S31 whether there is a secondary battery 12 determined to be a dispatching object for the supply-and-demand plan (step S39).

If it has been determined in the determination result read in step S31 that there is a secondary battery 12 determined to be a dispatching object for the supply-and-demand plan (YES in step S39), the dispatching priority order determination module 59 determines the dispatching priority order of economic load dispatching control associated with the supply-and-demand plan in the specific time zone for the secondary battery 12 set as a dispatching object shown by the determination result read in step S31 to be the second priority order following the first priority set in step S32 and terminates the setting of an dispatching priority order (step S40). At this time, the dispatching priority orders that have been set include only the first and second priority orders.

If it has been determined in the determination result read in step S31 that there is no secondary battery 12 determined to be a dispatching object for the supply-and-demand plan (NO in step S39), the dispatching priority order determination module 59 terminates the setting of the dispatching priority order without setting the second and third dispatching priority orders of economic load dispatching control associated with the supply-and-demand plan in the specific time zone (step S41). At this time, the dispatching priority order that has been set is only the first priority order.

By the above processing operations, the main controller 5 can give a dispatching priority order of economic load dispatching control to each of the existing generator 1, dispersed power systems 8, and secondary batteries 12 in the electric power system.

After having completed the setting of a dispatching priority order, the dispatching priority order determination module 59 combines the dispatching priority order setting result with the result of determining whether to set an object as a dispatching object for the supply-and-demand plan in the specific time zone and the result of measuring the output power of the existing generator 1, thereby creating dispatching object-dispatching ratio information 103. The dispatching priority order determination module 59 transmits this information to the integrated controller 4.

When having received the dispatching object-dispatching ratio information 103, the integrated controller 4 makes a supply-and-demand plan using the existing generator 1 and the individual dispersed power systems 8 and secondary batteries 12 set as dispatching objects in a specific time zone on the basis of the generated electricity of the existing generator 1, the identification data items on and the values of output power of the dispersed power systems 8 set as dispatching objects, the SOC values of the secondary batteries 12 set as dispatching objects, the full charging capacity, and the dispatching priority orders. Then, the integrated controller 4 transmits an operation instruction 104 to the existing generator 1 according to the formed supply-and-demand plan when the specific time zone has been reached. In addition, the integrated controller 4 transmits an operation instruction 104 to the dispersed power systems 8 via the PCS 6.

As described above, the electric power supply-and-demand control apparatus 9 in the electric power system supply-and-demand control system of the first embodiment determines on the basis of the output power characteristics of dispersed power sources arranged in various places in the electric power system whether to set each of the dispersed power sources in various places as a dispatching object for an electric power supply-and-demand plan at a specific time on a specific date.

Specifically, the electric power supply-and-demand control apparatus 9 receives the generated electricity of each of the dispersed power systems 8 to make a supply-and-demand plan in a specific time zone in an electric power system that includes the existing generator 1, dispersed power systems 8, and secondary batteries 12. On the basis of the magnitude of the generated electricity, the electric power supply-and-demand control apparatus 9 determines whether to set each of the dispersed power systems 8 as a dispatching object for a supply-and-demand plan in a specific time zone.

In addition, the electric power supply-and-demand control apparatus 9 receives the SOC value of and the full charging capacity of each of the secondary batteries 12. On the basis of the magnitude of the SOC value and that of the full charging capacity, the electric power supply-and-demand control apparatus 9 determines whether to set each of the secondary batteries 12 as a dispatching object for the supply-and-demand plan in the specific time zone.

Accordingly, not only can dispersed power systems necessary for a supply-and-demand plan be sorted out, but also positive use of secondary batteries enables dispersed power systems to be used without deteriorating electric power quality.

From this time on, it is all right if dispersed power systems 8 and secondary batteries 12 to be set as dispatching objects for a supply-and-demand plan in a newly determined specific time zone are determined by the aforementioned processing operation and then the dispatching priority orders of the objects including the existing generator 1 are determined.

### (Second Embodiment)

Next, a second embodiment will be explained. In the configuration of an electric power system supply-and-demand control system of the second embodiment, an explanation of the same parts as those of the first embodiment will be omitted.

In the electric power system supply-and-demand control system of the second embodiment, when it is predicted that dispersed power systems 8 will not be able to supply necessary and sufficient electric power according to a power demand, taking into account weather conditions of the next day onward, secondary battery sites that satisfy a specific condition are built in advance to enable secondary batteries 12 to supply necessary and sufficient power in place of the dispersed power systems 8. The condition is to be capable of outputting electric power more than twice as high as a predicted value of the maximum system capacity minus a base supply capability. The predicted value is a power demand needing to be covered by power supply from dispersed power systems 8 or secondary batteries 12 excluding the existing generator 1 at a peak period throughout the year.

Then, when the total charge (in Wh) of secondary batteries has not reached the total generated electricity on a specific day associated with an electric power supply-and-demand plan, that is, a predicted value of the area (in Wh) of the total demand in a graph of a time characteristic of a power demand, the electric power system supply-and-demand control system informs the manager that necessary electric power needs to be secured by borrowing electric power from other electric power companies or buying electric power from electric power customers that have independent dispersed power systems.

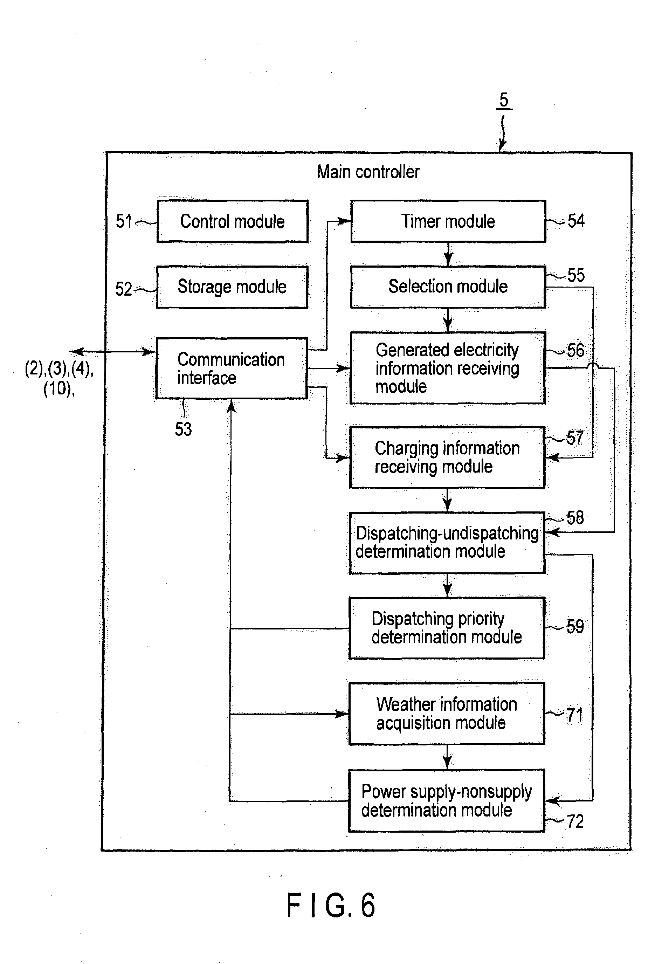

FIG. 6 is a block diagram of a functional configuration of a main controller of an electric power supply-and-demand control apparatus in an electric power system supply-and-demand control system according to the second embodiment.

In the second embodiment, the main controller 5 of the electric power supply-and-demand control apparatus 9 includes not only the control module 51, storage module 52, communication interface 53, timer module 54, selection module 55, generated electricity information receiving module 56, charging information receiving module 57, dispatching-undispatching determination module 58, and dispatching priority determination module 59 which have been explained in the first embodiment but also a weather information acquisition module 71 and a power supply-nonsupply determination module 72.

The communication interface 53, timer module 54, selection module 55, generated electricity information receiving module 56, charging information receiving module 57, dispatching-undispatching determination module 58, dispatching priority determination module 59, weather information acquisition module 71, and power supply-nonsupply determination module 72, which are processing modules realized by software running on a microprocessor, can mutually exchange information as shown in FIG. 6.

The weather information acquisition module 71 acquires, from an external device, weather forecast information on a specific day concerning a supply-and-demand plan to be made in a region where the electric power system is installed.

The power supply-nonsupply determination module 72 calculates the total charge of a secondary battery 12 determined to be a dispatching object for a supply-and-demand plan of the day when a weather condition shown by weather forecast information acquired by the weather information acquisition module 71 is any kind of weather except fair weather and it is predicted that the dispersed power systems 8 of the day will not be able to supply necessary and sufficient electric power. The power supply-nonsupply determination module 72 compares the total charge with the predicted value of the total generated electricity for one day on a specific day, thereby determining whether necessary and sufficient electric power can be supplied from the secondary batteries 12 in place of the dispersed power systems 8 on the specific day.

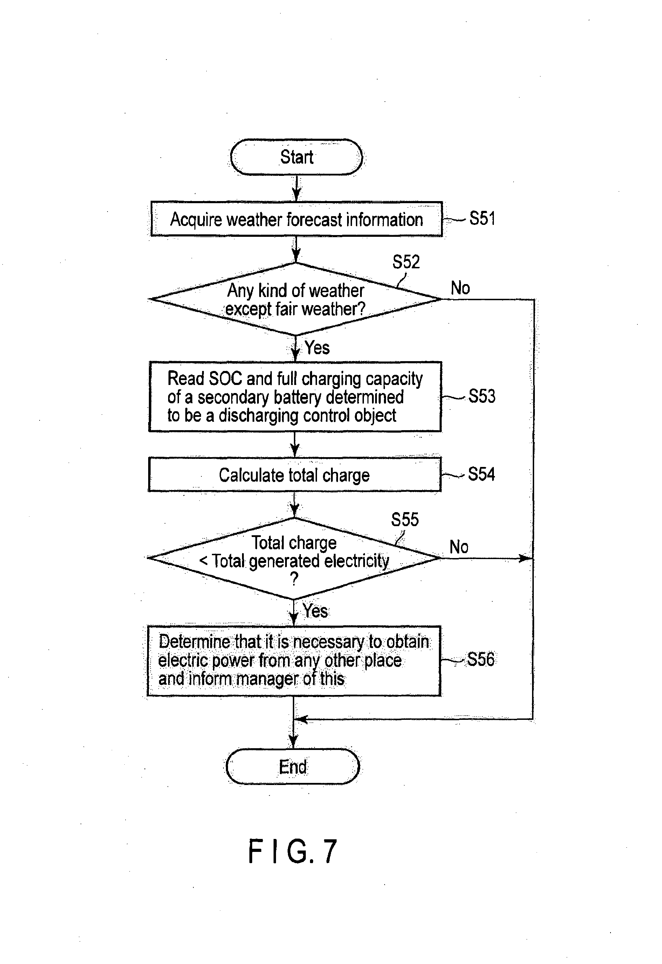

FIG. 7 is a flowchart to explain the procedure for determining whether to secure more electric power, taking weather conditions into account, in the electric power system supply-and-demand control system of the second embodiment.

Here, suppose the dispersed power systems 8 in the electric power system are photovoltaic power systems or solar thermal power generation systems. In addition, suppose the dispatching-undispatching determination module 58 has determined the dispersed power systems 8 to be dispatching objects for a supply-and-demand plan on a specific day, using an SOC rated value (B) and a rated value (C) of the full charging capacity on the specific day associated with a supply-and-demand plan to be made. Furthermore, suppose the storage module 52 has stored a predicted value of the total generated electricity for one day in the electric power system on the specific day on the basis of information on the accumulation of the past total power demands stored in the storage module 52 using the rated value (B) and the rated value (C).

First, the weather information acquisition module 71 of the main controller 5 in the electric power supply-and-demand control apparatus 9 acquires weather forecast information on a day associated with a supply-and-demand plan to be made in a region in which an electric power system is to be installed from an external device via the communication interface 53 (step S51).

When the weather condition on a specific day, for example, the next day, shown by the acquired weather forecast information, is any kind of weather except fair weather, that is, in a state where it is predicted that the dispersed power systems 8 composed of photovoltaic power systems or solar thermal power generation systems will not be able to supply necessary and sufficient electric power (YES in step S52), the weather information acquisition module 71 informs the power supply-nonsupply determination module 72 of this.

Then, the power supply-nonsupply determination module 72 reads, from the storage module 52, the result of determining secondary batteries 12 to be dispatching objects for the supply-and-demand plan on the specific day. The power supply-nonsupply determination module 72 acquires the result of measuring the SOC values of the secondary batteries 12 determined to be dispatching objects and the result of measuring the full charging capacity (step S53).

Then, the power supply-nonsupply determination module 72 calculates the charge for each of the secondary batteries 12 determined to be dispatching objects on the basis of the acquisition result in step S53. The power supply-nonsupply determination module 72 adds up these values, thereby calculating the total charge, the electric energy that can be output on the specific day from the individual secondary batteries 12 determined to be dispatching objects (step S54).

Then, the power supply-nonsupply determination module 72 reads, from the storage module 52, a predicted value of the total generated electricity in the electric power system on the specific day. The power supply-nonsupply determination module 72 compares the read predicted value with the total charge calculated in step S54, thereby determining whether the total charge satisfies the predicted value of the total generated electricity (step S55).

When the compared total charge satisfies the predicted value of the total generated electricity (NO in step S55), the power supply-nonsupply determination module 72 determines that necessary and sufficient electric power can be supplied to meet the power demand by the discharging of the secondary batteries 12 in the electric power system even if it is predicted that the dispersed power systems 8 will not be able to supply necessary and sufficient electric power to meet the power demand on the specific day.

When the compared total charge does not satisfy the predicted value of the total generated electricity (YES in step S55), the power supply-nonsupply determination module 72 determines that it is necessary to borrow electric power from other electric power companies or buy electric power from electric power customers on the specific day or to secure many secondary batteries 12 charged to the full charging capacity. The reason for this is that it is predicted that the dispersed power systems 8 will not be able to supply necessary and sufficient electric power to meet the power demand on the specific day and that necessary and sufficient electric power will not be suppliable by the discharging of the secondary batteries 12 in the electric power system to meet the power demand.

At this time, the power supply-nonsupply determination module 72 displays the determination result on, for example, a display module (not shown) in the electric power supply-and-demand control apparatus 9 to inform the manager of the determination result (step S56). Therefore, the power supply-nonsupply determination module 72 can contribute to the preparation of a more suitable electric power supply-and-demand plan and further to the preparation of a more suitable operation plan for secondary batteries.

As described above, with the second embodiment, the electric power supply-and-demand control apparatus 9 in the electric power system supply-and-demand control system calculates the total charge of the secondary batteries 12 determined to be dispatching objects for the supply-and-demand plan on the specific day when it is predicted that the dispersed power systems 8 composed of photovoltaic power systems or solar thermal power generation systems will not be able to supply necessary and sufficient electric power on the specific day, taking into account a weather forecast on the specific day. The electric power supply-and-demand control apparatus 9 compares the total charge with the predicted value of the total generated electricity on the specific day, thereby making it possible to determine whether the secondary batteries 12 can supply necessary and sufficient electric power in place of the dispersed power systems 8.

Next, a modification of the second embodiment will be explained. This modification is suitable for a situation where the total charge compared by the power supply-nonsupply determination module 72 of the main controller 5 in the electric power supply-and-demand control apparatus 9 has not reached the predicted value of the total generated electricity. In addition, the modification is suitable for a situation where it is predicted that the dispersed power systems 8 will not be able to supply necessary and sufficient electric power to meet the power demand on a specific day in the above situation and that necessary and sufficient electric power will not be suppliable by the discharging of the secondary batteries 12 in the electric power system to meet the power demand. At this time, in the modification, the rated value (B) used as a reference to determine whether to set a secondary battery 12 as a discharging control object is decreased. After this, the electric power supply-and-demand control apparatus 9 determines again whether to set the secondary battery 12 as a discharging control object and increases the number of secondary batteries 12 set as discharging control objects, thereby causing the total charge compared by the power supply-nonsupply determination module 72 of the main controller 5 to reach the predicted value of the total generated electricity.

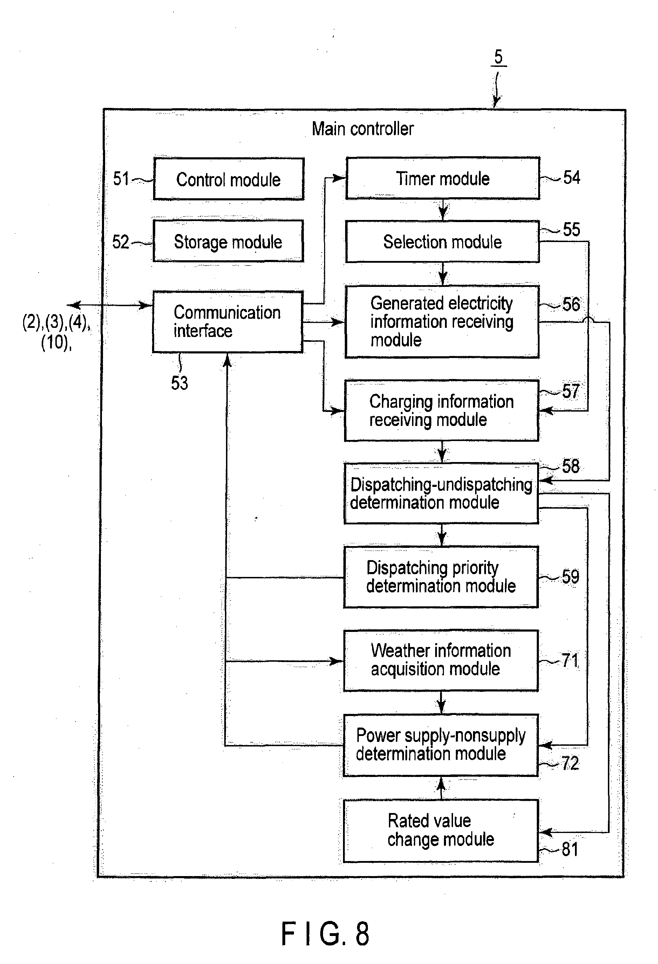

FIG. 8 is a block diagram showing a functional configuration of the main controller of the electric power supply-and-demand control apparatus in the electric power system supply-and-demand control system according to the modification of the second embodiment.

In the modification, the main controller 5 of the electric power supply-and-demand control apparatus 9 includes not only the control module 51, storage module 52, communication interface 53, timer module 54, selection module 55, generated electricity information receiving module 56, charging information receiving module 57, dispatching-undispatching determination module 58, dispatching priority determination module 59, weather information acquisition module 71, and power supply-nonsupply determination module 72 which have been explained in the second embodiment but also a rated value change module 81.

The communication interface 53, timer module 54, selection module 55, generated electricity information receiving module 56, charging information receiving module 57, dispatching-undispatching determination module 58, dispatching priority determination module 59, weather information acquisition module 71, power supply-nonsupply determination module 72, and rated value change module 81, which are processing modules realized by software running on a microprocessor, can mutually exchange information as shown in FIG. 8.

When it has been determined that it is predicted that the dispersed power systems 8 will not be able to supply necessary and sufficient electric power to meet a power demand on a specific day because the total charge compared by the power supply-nonsupply determination module 72 has not reached the predicted value of the total generated electricity and that necessary and sufficient electric power will not be suppliable by the discharging of the second batteries 12 in the electric power system to meet the power demand, the rated value change module 81 changes each of the secondary batteries 12 so as to decrease the rated value (B), a reference for determining whether to set a secondary battery 12 as a discharging control object, by a specific value.

At this time, using the changed rated value (B), the dispatching-undispatching determination module 58 determines again whether to set each of the secondary batteries 12 as a dispatching object for the supply-and-demand plan on the specific day.

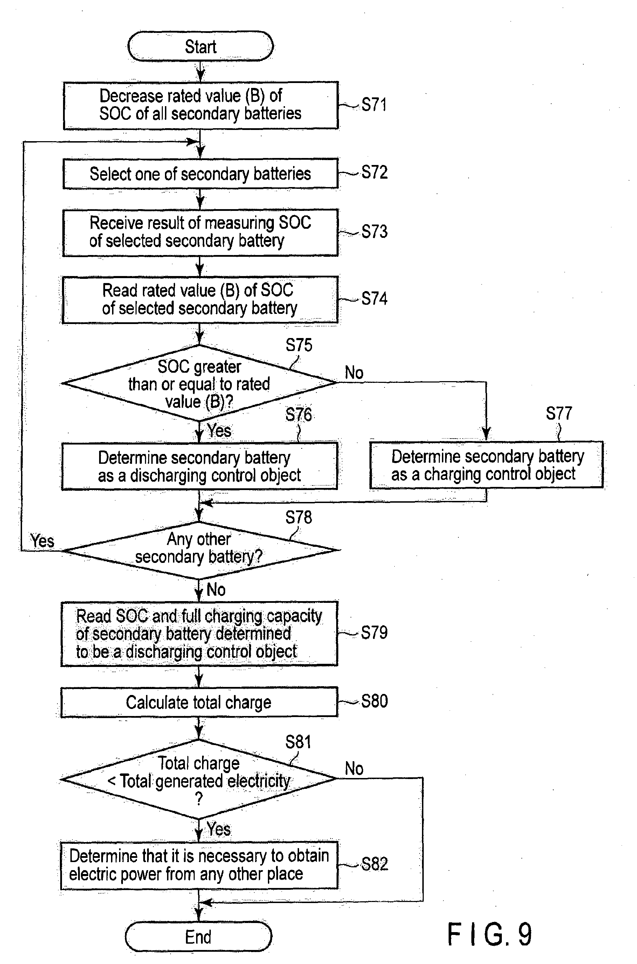

FIG. 9 is a flowchart to explain the procedure for determining whether to secure more electric power in the electric power system supply-and-demand control system according to the modification of the second embodiment, taking weather conditions into account.

Here, suppose the following situations. A first situation is such that the total charge compared in the process in step S55 explained in the second embodiment has not reached the predicted value of the total generated electricity. A second situation is such that it is predicted that the dispersed power systems 8 will not be able to supply necessary and sufficient electric power to meet the power demand on a specific day and that necessary and sufficient electric power will not be suppliable by the discharging of the secondary batteries 12 in the electric power system to meet the power demand. In this situation, the power supply-nonsupply determination module 72 determines that it is necessary to borrow electric power from other electric power companies or buy electric power from electric power customers on the specific day.

At this time, the rated value change module 81 changes each of the secondary batteries 12 in the electric power system so as to decrease the SOC rated value (B), a reference for determining whether to set a secondary battery 12 as a discharging control object, by a specific value (step S71).

The reason why the SOC rated value (B) is decreased is that whether to set a secondary battery 12 as a discharging control object is determine again using the changed rated value to increase the number of secondary batteries 12 set as discharging control objects. A decrease in the rated value (B) is set at a value that is in no danger of affecting power supply according to the electric power supply-and-demand plan on the specific day as a result of a significant decrease in the SOC of the secondary batteries 12 set as discharging control objects on the specific day.

Then, the dispatching-undispatching determination module 58 compares the SOC value of each of the secondary batteries 12 with the changed rated value (B), thereby determining whether to set each of the secondary batteries 12 as a discharging control object or a charging control object as in the processes in steps S12 to S17 shown in FIG. 4 explained in the first embodiment (steps S72 to S77).

In the first embodiment, it has been finally determined using the rated value (C) whether to set a secondary battery 12 determined to be a discharging control object in the determination as a dispatching object. However, since the rated value (C) has not been changed here, the dispatching-undispatching determination module 58 determines that all of the secondary batteries 12 determined to be discharging control objects are dispatching objects for the supply-and-demand plan on the specific day.

After the determination has completed, if there is any other secondary battery 12 that has not been selected as an object to be determined again to be a dispatching object for the supply-and-demand plan on the specific day or not among the secondary batteries 12 in the electric power system (YES in step S78), the selection module 55 returns to step S72, selects an identification data item on any one of the unselected secondary batteries 12 as a new determination object, and proceeds to step 73 and forward.

If there is no other secondary battery 12 that has not been selected as an object to be determined again to be a dispatching object for the supply-and-demand plan on the specific day or not among the secondary batteries 12 in the electric power system (NO in step S78), the power supply-nonsupply determination module 72 reads, from the storage module 52, the results of measuring the SOC value of and the full charging capacity of a secondary battery 12 determined to be a dispatching object for the supply-and-demand plan on the specific day (step S79). That there is no other secondary battery 12 that has not been selected means that another determination as to whether to set each of the secondary batteries 12 in the electric power system as a dispatching object for the supply-and-demand plan on the specific day has been completed.

Since the rated value (B) has been decreased in step S71, the comparison of the changed rated value (B) with the unchanged rated value (B) has shown that the number of secondary batteries 12 determined to be dispatching objects for the supply-and-demand plan on the specific day is greater than or equal to the number before the change.

Then, on the basis of the result acquired in step S79, the power supply-nonsupply determination module 72 calculates again the charge of each of the secondary batteries 12 determined to be dispatching objects. The power supply-nonsupply determination module 72 adds up these values, thereby calculating again the total charge of the secondary batteries 12 determined to be dispatching objects (step S80).

Then, the power supply-nonsupply determination module 72 reads a predicted value of the total generated electricity on the specific day from the storage module 52. The power supply-nonsupply determination module 72 compares the read predicted value with the total charge calculated in step S84, thereby determining again whether the total charge satisfies the predicted value of the total generated electricity (step S81).

When the compared total charge has satisfied the predicted value of the total generated electricity (NO in step S81), the power supply-nonsupply determination module 72 has determined that necessary and sufficient electric power can be supplied by the discharging of the secondary batteries 12 in the electric power system to meet the power demand even if it is predicted that the dispersed power systems 8 will not be able to supply necessary and sufficient electric power to meet the power demand on the specific day. In this way, the determination result differing from that before the change of the rated value (B) is obtained.

When the compared total charge has not satisfied the predicted value of the total generated electricity (YES in step S81), the power supply-nonsupply determination module 72 determines that it is still predicted that the dispersed power systems 8 will not be able to supply necessary and sufficient electric power to meet the power demand on the specific day and that necessary and sufficient electric power will not be suppliable by the discharging of the secondary batteries 12 in the electric power system to meet the power demand. At this time, the power supply-nonsupply determination module 72 determines that it is necessary to borrow electric power from other electric power companies or buy electric power from electric power customers on the specific day (step S82).

At this time, the power supply-nonsupply determination module 72 returns to step S71, decreases the rated value (B) further in a range that is in no danger of affecting power supply, and proceeds to step S72.

As described above, with the modification of the second embodiment, even when it has been determined that necessary and sufficient electric power cannot be supplied by the discharging of the secondary batteries 12 in the electric power system to meet the power demand because the total charge of the secondary batteries has not reached the predicted value of the total generated electricity, the electric power supply-and-demand control apparatus 9 decreases the rated value (B) of the secondary batteries 12 and makes a determination again, thereby enabling the total charge to satisfy the predicted value of the total generated electricity.

According to each of the above embodiments, it is possible to provide an electric power supply-and-demand control apparatus capable of contributing to the preparation of a suitable electric power supply-and-demand plan, taking into account the dispersed power sources arranged in various places in an electric power system.

While certain embodiments have been described, these embodiments have been presented by way of example only, and are not intended to limit the scope of the invention, as it is defined by the appended claims.

## Claims

1. An electric power supply-and-demand control apparatus comprising:
a measuring module (2, 3) which measures an output power characteristic of dispersed power sources arranged in various places in an electric power system; and
a determination module (58) which determines based on the output power characteristic measured by the measuring module (2, 3) whether to set each of the dispersed power sources in various places as a dispatching object for an electric power supply-and-demand plan at a specific time on a specific date, **characterized in that**
the dispersed power sources include natural energy power supplies (8) that receive natural energy and generate electricity and electric power storage devices (7) that store electric power generated by the natural energy power supplies (8),
the measuring module (2, 3) measures information on a characteristic of the generated electricity of the natural energy power supplies (8) and the charging state of and a performance degradation characteristic of the electric power storage devices (7), and
the determination module (58) includes
a first determination function of determining based on a fluctuation range of the generated electricity shown by the information measured by the measuring module (2, 3) whether to set each of the natural energy power supplies (8) generating electric power constituting the generated electricity as a dispatching object for an electric power supply-and-demand plan at the specific time on the specific date, and
a second determination function of determining based on the charging state of and the degree of the performance degradation of the electric power storage devices (7) shown by the information measured by the measuring module (2, 3) whether to set each of the electric power storage devices (7) in various places as a dispatching object for an electric power supply-and-demand plan at the specific time on the specific date.

2. The electric power supply-and-demand control apparatus of Claim 1, **characterized in that**
the measuring module (2, 3) measures the ratio of currently usable electric power to a full charging capacity of the electric power storage devices (7),
the second determination function of the determination module (58) determines the electric power storage devices (7) to be discharging control objects for power supply according to an electric power supply-and-demand plan at the specific time on the specific date when the ratio of the currently usable electric power to the full charging capacity of the electric power storage devices (7) measured by the measuring module (2, 3) is greater than or equal to a rated value of the ratio, and determines the electric power storage devices (7) to be charging control objects when the ratio of the currently usable electric power to the full charging capacity of the electric power storage devices (7) is lower than the rated value of the ratio, and
further determines based on the degree of the performance degradation whether to set each of the electric power storage devices (7) determined to be the discharging control objects as dispatching objects for an electric power supply-and-demand plan at the specific time on the specific date.

3. The electric power supply-and-demand control apparatus of Claim 1, **characterized in that**
the first determination function of the determination module (58) determines whether to set the natural energy power supplies (8) that generate electric power constituting the generated electricity as dispatching objects for an electric power supply-and-demand plan at the specific time on the specific date, based on the ratio of the fluctuation range of the measured generated electricity to a system capacity of an electric power system including the natural energy power supplies (8) and the electric power storage devices (7).

4. The electric power supply-and-demand control apparatus of Claim 1, **characterized in that**
the first determination function of the determination module (58) determines whether to set the natural energy power supplies (8) that generate electric power constituting the generated electricity as dispatching objects for an electric power supply-and-demand plan at the specific time on the specific date, based on the ratio of the fluctuation range of the measured generated electricity to a rated output of the natural energy power supplies (8).

5. The electric power supply-and-demand control apparatus of Claim 1, **characterized in that**
the natural energy power supplies (8) are of at least one of the following types of power generation systems: a photovoltaic power system that receives solar light energy and generates electricity, a solar thermal electric generation system that receives solar heat energy and generates electricity, a wind generator system that receives wind power energy and generates electricity, a hydroelectric system that receives hydro-energy and generates electricity, and a geothermal power generation system that receives geothermal energy and generates electricity.

6. The electric power supply-and-demand control apparatus of Claim 1, **characterized by** further comprising:
a power supply-nonsupply determination module (72) which compares the charge of the electric power storage devices (7) with a predicted value of the total generated electricity of the electric power system on a specific day when it is predicted that a weather condition on the specific day will be such that the natural energy power supplies (8) cannot supply electric power, thereby determining whether it is necessary to introduce electric power from another electric power supply source differing from the electric power system into the electric power system on the specific day.

7. The electric power supply-and-demand control apparatus of Claim 1, **characterized by** further comprising:
a second electric generating system which generates electricity using energy other than natural energy,
**characterized in that** electric power to be generated by the second electric generating system at the specific time on the specific date is given a first priority order in power supply by economic load dispatching control at the specific time on the specific date,
electric power to be generated by the natural energy power supplies (8) at the specific time on the specific date is given a second priority order lower than the first priority order in power supply by economic load dispatching control at the specific time on the specific date and electric power to be generated by the electric power storage devices (7) at the specific time on the specific date is given a third priority order lower than the second priority order in power supply by economic load dispatching control at the specific time on the specific date when the first determination function has determined the natural energy power supplies (8) to be dispatching objects for an electric power supply-and-demand plan at the specific time on the specific date and the second determination function has determined the electric power storage devices (7) to be dispatching objects for an electric power supply-and-demand plan at the specific time on the specific date, and
electric power to be output by the power supplies determined to be the dispatching objects is given the second priority order in power supply by economic load dispatching control at the specific time on the specific date when the first determination function has determined the natural energy power supplies (8) to be dispatching objects for an electric power supply-and-demand plan at the specific time on the specific date while the second determination function has not determined the electric power storage devices (7) to be dispatching objects for an electric power supply-and-demand plan at the specific time on the specific date or when the second determination function has determined the electric power storage devices (7) to be dispatching objects for an electric power supply-and-demand plan at the specific time on the specific date while the first determination function has not determined the natural energy power supplies (8) to be dispatching objects for an electric power supply-and-demand plan at the specific time on the specific date.

## Patentansprüche

1. Vorrichtung zur Steuerung von Stromangebot und -nachfrage, umfassend:
ein Messmodul (2,3), welches eine Stromausgangseigenschaft von verteilten Stromquellen misst, die in verschiedenen Orten in einem elektrischen Stromsystem angeordnet sind; und
ein Bestimmungsmodul (58), welches basierend auf der Stromausgangseigenschaft, die vom Messmodul (2,3) gemessen wurde, bestimmt, ob jede der verteilten Stromquellen in verschiedenen Orten als ein ausführendes Objekt für einen Stromangebots- und -nachfrageplan zu einer bestimmten Zeit an einem bestimmten Datum bestimmt wird, **dadurch gekennzeichnet, dass** die verteilten Stromquellen natürliche Energiequellen (8), die natürliche Energie empfangen und elektrischen Strom erzeugen, und elektrische Stromspeichervorrichtungen (7) umfassen, welche den elektrischen Strom speichern, der von den natürlichen Energiequellen (8) erzeugt wird,
das Messmodul (2,3) Informationen bezüglich einer Eigenschaft des von den natürlichen Energiequellen (8) erzeugten elektrischen Stroms sowie den Ladezustand und eine Leistungsabnahmeeigenschaft der elektrischen Stromspeichervorrichtungen (7) misst, und
das Bestimmungsmodul (58)
eine erste Bestimmungsfunktion zum Bestimmen, basierend auf einem Fluktuationsbereich des erzeugten elektrischen Stroms, der von der Information angezeigt wird, die vom Messmodul (2,3) gemessen wird, ob jede der verteilten Stromquellen, die elektrischen Strom erzeugen, der den erzeugten Strom bildet, als ein ausführendes Objekt für einen Stromangebots- und -nachfrageplan zur bestimmten Zeit am bestimmten Datum bestimmt wird, und
eine zweite Bestimmungsfunktion zum Bestimmen, basierend auf den Ladezustand und dem Umfang der Leistungsabnahme der elektrischen Stromspeichervorrichtungen (7), die von der vom Messmodul (2,3) gemessenen Information angezeigt werden, ob jede der verteilten Stromquellen in verschiedenen Orten als ein ausführendes Objekt für einen Stromangebots- und -nachfrageplan zu der bestimmten Zeit am bestimmten Datum bestimmt wird, umfasst.

2. Vorrichtung zur Steuerung von Stromangebot und -nachfrage nach Anspruch 1,
**dadurch gekennzeichnet, dass**
das Messmodul (2,3) das Verhältnis des momentan verwendbaren elektrischen Stroms zu einer vollen Ladekapazität der elektrischen Stromspeichervorrichtungen (7) misst,
die zweite Bestimmungsfunktion des Bestimmungsmoduls (58) die elektrischen Stromspeichervorrichtungen (7) bestimmt, die zu entladene Steuerungsobjekte für die Stromversorgung gemäß dem Stromangebots- und -nachfrageplan zu der bestimmten Zeit am bestimmten Datum sein sollen, wenn das Verhältnis des momentan verwendbaren elektrischen Stroms zur vollen Ladekapazität der elektrischen Stromspeichervorrichtung, welches vom Messmodul (2,3) gemessen wird, größer als oder gleich ein(em) Nennwert des Verhältnisses ist, und
die elektrische Stromspeichervorrichtungen (7) bestimmt, die zu ladende Steuerungsobjekte sein sollen, wenn das Verhältnis des momentan verwendbaren elektrischen Stroms zur vollen Ladekapazität der elektrischen Stromspeichervorrichtung kleiner als der Nennwert des Verhältnisses ist, und
weiter bestimmt, basierend auf dem Umfang der Leistungsabnahme, ob jede der elektrischen Stromspeichervorrichtungen (7), welche bestimmt wurden, die zu entladenden Steuerungsobjekte als ausführende Objekte für einen Stromangebots- und -nachfrageplan zu der bestimmten Zeit am bestimmten Datum zu sein, bestimmt werden soll.

3. Vorrichtung zur Steuerung von Stromangebot und -nachfrage nach Anspruch 1,
**dadurch gekennzeichnet, dass**
die erste Bestimmungsfunktion des Bestimmungsmoduls (58) bestimmt, ob die natürlichen Energiequellen (8), welche den elektrischen Strom erzeugen, der den erzeugten Strom bildet, als ausführende Objekte für einen Stromangebots- und - nachfrageplan zu der bestimmten Zeit am bestimmten Datum bestimmt werden sollen, basierend auf dem Verhältnis des Fluktuationsbereichs des gemessenen erzeugten elektrischen Stroms zu einer Systemkapazität eines elektrischen Stromsystems, beinhaltend die natürlichen Energiequellen (8) und die elektrischen Stromspeichervorrichtungen (7).

4. Vorrichtung zur Steuerung von Stromangebot und -nachfrage nach Anspruch 1,
**dadurch gekennzeichnet, dass**
die erste Bestimmungsfunktion des Bestimmungsmoduls (58) bestimmt, ob die natürlichen Energiequellen (8), welche den Strom erzeugen, der den erzeugten Strom bildet, als ausführende Objekte für einen Stromangebots- und - nachfrageplan zu der bestimmten Zeit am bestimmten Datum bestimmt werden sollen, basierend auf dem Verhältnis des Fluktuationsbereichs des gemessenen erzeugten elektrischen Stroms zu einer gewerteten Abgabe der natürlichen Energiequellen (8).

5. Vorrichtung zur Steuerung von Stromangebot und -nachfrage nach Anspruch 1,
**dadurch gekennzeichnet, dass**
die natürlichen Energiequellen (8) zu mindestens einem der folgenden Typen von Stromerzeugungssystemen gehören: ein photovoltaisches Stromsystem, welches solare Lichtenergie empfängt und elektrischen Strom erzeugt, ein solarthermisches Stromerzeugungssystem, welches solare Wärmeenergie empfängt und elektrischen Strom erzeugt, ein Windgeneratorsystem, welches Windenergie empfängt und elektrischen Strom erzeugt, ein hydroelektrisches System, welches Hydroenergie empfängt und elektrischen Strom erzeugt, und ein geothermisches Stromerzeugungssystem, welches geothermische Energie empfängt und elektrischen Strom erzeugt.

6. Vorrichtung zur Steuerung von Stromangebot und -nachfrage nach Anspruch 1,
**dadurch gekennzeichnet, dass** sie weiterhin umfasst:
ein Stromversorgungs-Nichtversorgungsbestimmungsmodul (72), welches die Beladung der elektrischen Stromspeichervorrichtungen (7) mit einem vorbestimmten Wert des insgesamt erzeugten elektrischen Stroms an einem bestimmten Tag vergleicht, für welchen vorausgesagt wurde, dass eine Wetterbedingung an diesem bestimmten Tag so sein wird, dass die natürlichen Energiequellen (8) keinen elektrischen Strom erzeugen können, wodurch bestimmt wird, ob es notwendig ist, an diesem bestimmten Tag elektrischen Strom von einer anderen elektrischen Energiequelle in das elektrischen Stromsystem einzuspeisen, die sich von den Stromsystemen unterscheidet.

7. Vorrichtung zur Steuerung von Stromangebot und -nachfrage nach Anspruch 1,
**dadurch gekennzeichnet, dass** sie weiterhin umfasst:
ein zweites stromerzeugendes System, welches Strom unter Verwendung von sich von natürlichen Energiequellen (8) unterscheidender Energie erzeugt, **dadurch gekennzeichnet, dass**
der vom zweiten stromerzeugenden System am bestimmten Tag zum bestimmten Datum zu erzeugende elektrische Strom von einer ökonomischen Lade-Ausführungssteuerung am bestimmten Tag zum bestimmten Datum mit einem ersten Prioritätsbefehl bezüglich der Stromversorgung versehen wird,
der von den natürlichen Energiequellen (8) am bestimmten Tag zum bestimmten Datum zu erzeugende elektrische Strom von einer ökonomischen Lade-Ausführungssteuerung am bestimmten Tag zum bestimmten Datum mit einem zweiten Prioritätsbefehl, der niedriger ist als der erste Prioritätsbefehl bezüglich der Stromversorgung, und der elektrische Strom, der von den elektrischen Stromspeichervorrichtungen (7) am bestimmten Tag zum bestimmten Datum zu erzeugen ist, von einer ökonomischen Lade-Ausführungssteuerung am bestimmten Tag zum bestimmten Datum mit einem dritten Prioritätsbefehl versehen wird, der geringer als der zweite Prioritätsbefehl bezüglich der Stromversorgung ist, wenn die erste Bestimmungsfunktion die natürlichen Energiequellen (8) als ausführende Objekte für einen Stromangebots- und -nachfrageplan am bestimmten Tag zum bestimmten Datum und die zweite Bestimmungsfunktion die elektrischen Stromspeichervorrichtungen (7) als ausführende Objekte für einen Stromangebots- und -nachfrageplan am bestimmten Tag zum bestimmten Datum bestimmt hat, und
der elektrische Strom, der von den Energiequellen, die als ausführende Objekte bestimmt wurden, abzugeben ist, von der ökonomischen Lade-Ausführungssteuerung am bestimmten Tag zum bestimmten Datum mit dem zweiten Prioritätsbefehl bezüglich der Stromversorgung versehen wird, wenn die erste Bestimmungsfunktion die natürlichen Energiequellen (8) als ausführende Objekte für einen Stromangebots- und -nachfrageplan am bestimmten Tag zum bestimmten Datum bestimmt hat, während die zweite Bestimmungsfunktion die elektrischen Stromspeichervorrichtungen (7) nicht als ausführende Objekte für einen Stromangebots- und -nachfrageplan am bestimmten Tag zum bestimmten Datum bestimmt hat oder wenn die zweite Bestimmungsfunktion die elektrischen Stromspeichervorrichtungen (7) als ausführende Objekte für einen Stromangebots- und -nachfrageplan am bestimmten Tag zum bestimmten Datum bestimmt hat, während die erste Bestimmungsfunktion die elektrischen Stromspeichervorrichtungen (7) nicht als ausführende Objekte für einen Stromangebots- und - nachfrageplan am bestimmten Tag zum bestimmten Datum bestimmt hat.

## Revendications

1. Appareil de commande d'offre et de demande d'énergie électrique comprenant :
un module de mesure (2, 3) qui mesure une caractéristique d'énergie de sortie de sources d'énergie dispersées agencées à divers emplacements dans un système d'énergie électrique ; et
un module de détermination (58) qui détermine, sur la base de la caractéristique d'énergie de sortie mesurée par le module de mesure (2, 3), s'il faut régler chacune des sources d'énergie dispersées à divers emplacements en tant qu'objet de répartition pour un plan d'offre et de demande d'énergie électrique à une heure spécifique d'une date spécifique, **caractérisé en ce que**
les sources d'énergie dispersées comprennent des alimentations d'énergie naturelle (8) qui reçoivent une énergie naturelle et génèrent de l'électricité et des dispositifs de stockage d'énergie électrique (7) qui stockent l'énergie électrique générée par les alimentations d'énergie naturelle (8),
le module de mesure (2, 3) mesure des informations sur une caractéristique de l'électricité générée des alimentations d'énergie naturelle (8) ainsi que l'état de charge et une caractéristique de dégradation de performance des dispositifs de stockage d'énergie électrique (7), et
le module de détermination (58) comprend :
une première fonction de détermination consistant à déterminer, sur la base d'une plage de fluctuations de l'électricité générée représentée par les informations mesurées par le module de mesure (2, 3) s'il faut régler chacune des alimentations d'énergie naturelle (8) générant de l'énergie électrique constituant l'électricité générée en tant qu'objet de répartition pour un plan d'offre et de demande d'énergie électrique à l'heure spécifique de la date spécifique, et
une deuxième fonction de détermination consistant à déterminer, sur la base de l'état de charge et du degré de dégradation de performance des dispositifs de stockage d'énergie électrique (7) représenté par les informations mesurées par le module de mesure (2, 3) s'il faut régler chacun des dispositifs de stockage d'énergie électrique (7) à divers emplacements en tant qu'objet de répartition pour un plan d'offre et de demande d'énergie électrique à l'heure spécifique de la date spécifique.

2. Appareil de commande d'offre et de demande d'énergie électrique selon la revendication 1, **caractérisé en ce que**
le module de mesure (2, 3) mesure le rapport de l'énergie électrique actuellement utilisable sur une capacité de charge totale des dispositifs de stockage d'énergie électrique (7),
la deuxième fonction de détermination du module de détermination (58) détermine que les dispositifs de stockage d'énergie électrique (7) sont des objets de commande de décharge pour l'alimentation d'énergie selon un plan d'offre et de demande d'énergie électrique à l'heure spécifique de la date spécifique lorsque le rapport de l'énergie électrique actuellement utilisable sur la capacité de charge totale des dispositifs de stockage d'énergie électrique (7) mesuré par le module de mesure (2, 3) est supérieur ou égal à une valeur nominale du rapport, et détermine que les dispositifs de stockage d'énergie électrique (7) sont des objets de commande de charge lorsque le rapport de l'énergie électrique actuellement utilisable sur la capacité de charge totale des dispositifs de stockage d'énergie électrique (7) est inférieur à la valeur nominale du rapport, et
détermine en outre, sur la base du degré de dégradation de performance, s'il faut régler chacun des dispositifs de stockage d'énergie électrique (7), déterminés comme étant les objets de commande de décharge, en tant qu'objets de répartition pour un plan d'offre et de demande d'énergie électrique à l'heure spécifique de la date spécifique.

3. Appareil de commande d'offre et de demande d'énergie électrique selon la revendication 1, **caractérisé en ce que**
la première fonction de détermination du module de détermination (58) détermine s'il faut régler les alimentations d'énergie naturelle (8), qui génèrent l'énergie électrique constituant l'électricité générée, en tant qu'objets de répartition pour un plan d'offre et de demande d'énergie électrique à l'heure spécifique de la date spécifique, sur la base du rapport de la plage de fluctuations de l'électricité générée mesurée sur une capacité de système d'un système d'énergie électrique comprenant les alimentations d'énergie naturelle (8) et les dispositifs de stockage d'énergie électrique (7).

4. Appareil de commande d'offre et de demande d'énergie électrique selon la revendication 1, **caractérisé en ce que**
la première fonction de détermination du module de détermination (58) détermine s'il faut régler les alimentations d'énergie naturelle (8), qui génèrent l'énergie électrique constituant l'électricité générée, en tant qu'objets de répartition pour un plan d'offre et de demande d'énergie électrique à l'heure spécifique de la date spécifique, sur la base du rapport de la plage de fluctuations de l'électricité générée mesurée sur une sortie nominale des alimentations d'énergie naturelle (8).

5. Appareil de commande d'offre et de demande d'énergie électrique selon la revendication 1, **caractérisé en ce que**
les alimentations d'énergie naturelle (8) sont au moins l'un des types suivants de systèmes de génération d'énergie : un système d'énergie photovoltaïque qui reçoit l'énergie de la lumière du soleil et qui génère de l'électricité, un système de génération électrique thermique solaire qui reçoit l'énergie de la chaleur du soleil et qui génère de l'électricité, un système d'éolienne qui reçoit l'énergie du vent et qui génère de l'électricité, un système hydroélectrique qui reçoit l'hydro-énergie et qui génère de l'électricité, et un système de génération d'énergie géothermique qui reçoit l'énergie géothermique et qui génère de l'électricité.

6. Appareil de commande d'offre et de demande d'énergie électrique selon la revendication 1, **caractérisé en ce qu'**il comprend en outre :
un module de détermination d'alimentation - non alimentation d'énergie (72) qui compare la charge des dispositifs de stockage d'énergie électrique (7) à une valeur prédite de l'électricité générée totale du système d'énergie électrique d'un jour spécifique lorsqu'il est prédit qu'une condition météorologique du jour spécifique est telle que les alimentations d'énergie naturelle (8) ne peuvent pas fournir d'énergie électrique, en déterminant de ce fait s'il est nécessaire d'introduire de l'énergie électrique d'une autre source d'alimentation d'énergie électrique différente du système d'énergie électrique dans le système d'énergie électrique pour le jour spécifique.

7. Appareil de commande d'offre et de demande d'énergie électrique selon la revendication 1, **caractérisé en ce qu'**il comprend en outre :
un deuxième système de génération d'électricité qui génère de l'électricité en utilisant une énergie autre qu'une énergie naturelle,
**caractérisé en ce que** l'énergie électrique à générer par le deuxième système de génération d'électricité à l'heure spécifique de la date spécifique se voit attribuer un premier ordre de priorité dans l'alimentation d'énergie par une commande de répartition de charge économique à l'heure spécifique de la date spécifique,
l'énergie électrique à générer par les alimentations d'énergie naturelle (8) à l'heure spécifique de la date spécifique se voit attribuer un deuxième ordre de priorité inférieur au premier ordre de priorité dans l'alimentation d'énergie par une commande de répartition de charge économique à l'heure spécifique de la date spécifique et l'énergie électrique à générer par les dispositifs de stockage d'énergie électrique (7) à l'heure spécifique de la date spécifique se voit attribuer un troisième ordre de priorité inférieur au deuxième ordre de priorité dans l'alimentation d'énergie par une commande de répartition de charge économique à l'heure spécifique de la date spécifique lorsque la première fonction de détermination a déterminé que les alimentations d'énergie naturelle (8) sont des objets de répartition pour un plan d'offre et de demande d'énergie électrique à l'heure spécifique de la date spécifique et la deuxième fonction de détermination a déterminé que les dispositifs de stockage énergie électrique (7) sont des objets de répartition pour un plan d'offre et de demande d'énergie électrique à l'heure spécifique de la date spécifique, et
l'énergie électrique à délivrer par les alimentations électriques déterminées comme étant les objets de répartition se voit attribuer le deuxième ordre de priorité dans l'alimentation d'énergie par une commande de répartition de charge économique à l'heure spécifique de la date spécifique lorsque la première fonction de détermination a déterminé que les alimentations d'énergie naturelle (8) sont des objets de répartition pour un plan d'offre et de demande d'énergie électrique à l'heure spécifique de la date spécifique alors que la deuxième fonction de détermination n'a pas déterminé que les dispositifs de stockage d'énergie électrique (7) sont des objets de répartition pour un plan d'offre et de demande d'énergie électrique à l'heure spécifique de la date spécifique ou lorsque la deuxième fonction de détermination a déterminé que les dispositifs de stockage d'énergie électrique (7) sont des objets de répartition pour un plan d'offre et de demande d'énergie électrique à l'heure spécifique de la date spécifique alors que la première fonction de détermination n'a pas déterminé que les alimentations d'énergie naturelle (8) sont des objets de répartition pour un plan d'offre et de demande d'énergie électrique à l'heure spécifique de la date spécifique.
